# EUROPEAN PATENT APPLICATION

(11) **EP 1 235 255 A1**
(43) Date of publication of application: **28.08.2002**
(21) Application number: 00974838.5
(22) Date of filing: 08.11.2000
(51) Int. Cl.: H01J 65/04, H05B 41/24

(54) **ELECTRODELESS LAMP**

(30) Priority: 09.11.1999 US 435960
(71) Applicant: MATSUSHITA ELECTRIC INDUSTRIAL CO., LTD., Kadoma-shi, Osaka 571-8501 (JP)
(72) Inventor: CHANDLER, Robert, Lexington, MA 02173 (US); POPOV, Oleg, Needham, MA 02194 (US); SHAPIRO, Edward K., Lexington, MA 02173 (US); MAYA, Jakob, Brookline, MA 02146 (US)
(74) Representative: Balsters, Robert
(86) International application number: PCT/JP00/07858
(87) International publication number: WO 01/035446

(57) **Abstract**

An electrodeless lamp includes an envelope (1) containing a fill of discharge gas; a magnetic core (7); an induction coil (6) wound around the magnetic core (7); a driver for supplying an electric current to the induction coil (6) to drive the electrodeless lamp; a socket (10) for receiving a power supplied to the electrodeless lamp; and heat conduction means (8, 9) thermally coupled to the magnetic core (7) and the socket (10) for conducting heat generated in the magnetic core (7) to the socket (10).

## Description

### FIELD OF THE INVENTION

The invention relates to electric lamps and, more specifically, to electrodeless lamps operated at frequencies from 20 kHz to 1 MHz.

### BACKGROUND OF THE INVENTION

Electrodeless fluorescent lamps have been recently introduced in markets for indoor, outdoor, industrial, and commercial applications. The advantage of electrodeless lamps is the removal of internal electrodes and heating filaments that are a life-limiting factor of conventional fluorescent lamps. Therefore, the life of electrodeless fluorescent lamps is substantially higher than that of conventional fluorescent lamps and can reach 100,000 hrs.

An electrodeless fluorescent lamp introduced in the market by General Electric Corp. ("Genura") is operated at a frequency of 2.65 MHz and used for indoor general lighting. This lamp is a replacement for a R30 incandescent lamp and has 1,100 lumen light output at 23 W of total power. The life of the Genura lamp, 15,000 hrs, is much longer than that of the incandescent lamp. The drawback of the Genura lamp is the high initial cost, partially due to the need to prevent electromagnetic interference and partially due to the circuit cost operating at 2.65 MHz. Both drawbacks could be diminished if the electrodeless fluorescent lamp was operated at low frequency as low as 100 kHz.

In U.S. Patent Applications 09/083,820 by Popov et al. and 09/303,951 by Chamberlain et al. (upon on which the present application claims priority and which has the same assignee as the present application) electrodeless fluorescent lamps operated at low frequencies from 50 kHz to 500 kHz were described. Those lamps utilized a ferrite core made from MnZn material, Litz wire, and an aluminum cooling structure that removed heat from the reentry cavity walls and ferrite core and redirected heat to the lamp fixture. The aluminum cooling structure comprises the aluminum cylinder inside the ferrite core and the aluminum base welded to the lamp fixture. This approach and construction were found to be very effective to keep the ferrite core at temperature below Curie point.

However, in many lamp applications (e.g. the replacement of a conventional incandescent lamp) the large and heavy metal (aluminum or copper) base is not suitable due to its large size and weight. Also, the replacement of the incandescent lamp requires the use of Edison socket that should be coupled with the base. Again, the diameter of the lamp base should not be larger than the diameter of the incandescent lamp bulb that is 60 mm.

The proximity of ferrite core to the metal base causes the interference of the magnetic field with the metal base that results in the increase of the coil/ferrite core power losses. Indeed, the magnetic field generated by the coil induces eddy currents in the metal base that causes power losses and reduces the combined coil/structure quality factor, Q. As a result, the lamp power efficiency and hence, efficacy decreases.

The need for the incorporation of the lamp driver and lamp matching network inside the lamp base and to couple them with the Edison socket makes the cooling issue more complex. Indeed, the temperature inside of the lamp base should not exceed - 100°C to provide integrity of the driver's components. The use of components that can stand higher temperatures leads to higher cost of the driver and hence, the lamp.

### DISCLOSURE OF THE INVENTION

The present invention comprises an electrodeless fluorescent lamp that includes a glass envelope containing a fill of discharge gas (for example, a mixture of inert gas and mercury vapor). A ferrite core and an induction coil made from Litz wire are positioned inside of the reentrant cavity. A cooling structure comprises a metal (aluminum, copper) tube placed inside of the cavity and a ceramic cylinder that is thermally coupled to the Edison socket with material having high thermal conductivity.

An objective of the present invention is to provide a cooling structure that keeps the ferrite core temperature below Curie point.

Another objective of the present invention is to provide low temperatures, T < 100°C, inside of the lamp base where the driver and matching network are placed.

A further objective of the present invention is to provide low power losses in the cooling structure and in the lamp base so to provide a high lamp power efficiency and efficacy.

Yet another objective of the present invention is to design a coil that has high quality factor at the frequency as low as 100 kHz so as to provide low coil power losses and high lamp power efficiency.

An additional objective of the present invention is to provide an electrodeless fluorescent lamp that can operate at 100 kHz that results in overall low cost system.

### BRIEF DESCRIPTION OF THE DRAWINGS

FIG. 1A and FIG. 1B are cross-sectional views of a first embodiment of the present invention showing the electrodeless compact fluorescent lamp with the metal tube and the metal cylinder.
FIG. 2A and FIG. 2B are views illustrating how a top edge of a metal tube 8 is positioned.
FIG. 3A, FIG. 3B and FIG. 3C show deformation of a magnetic field in the vicinity of a magnetic core 7 caused by a disc formed of a magnetic material.
FIG. 4 is a cross-sectional view of a second embodiment of the present invention showing the electrodeless compact fluorescent lamp with the metal tube and the ceramic "skirt".
FIG. 5 is a graph showing the run-up temperatures of the ferrite core and the area in the enclosure where the driver is located.
FIG. 6 is a graph showing coil/ferrite power losses as a function of the total lamp power for three driving frequencies: 101 kHz, 135 kHz, and 170 kHz. The cooling structures as is shown in FIG. 1A.
FIG. 7 is a graph showing the lamp power efficiency and efficacy as functions of driving frequency for the cooling structure shown in FIG. 1A, the RF power being 23 W.

### BEST MODE FOR CARRYING OUT THE INVENTION

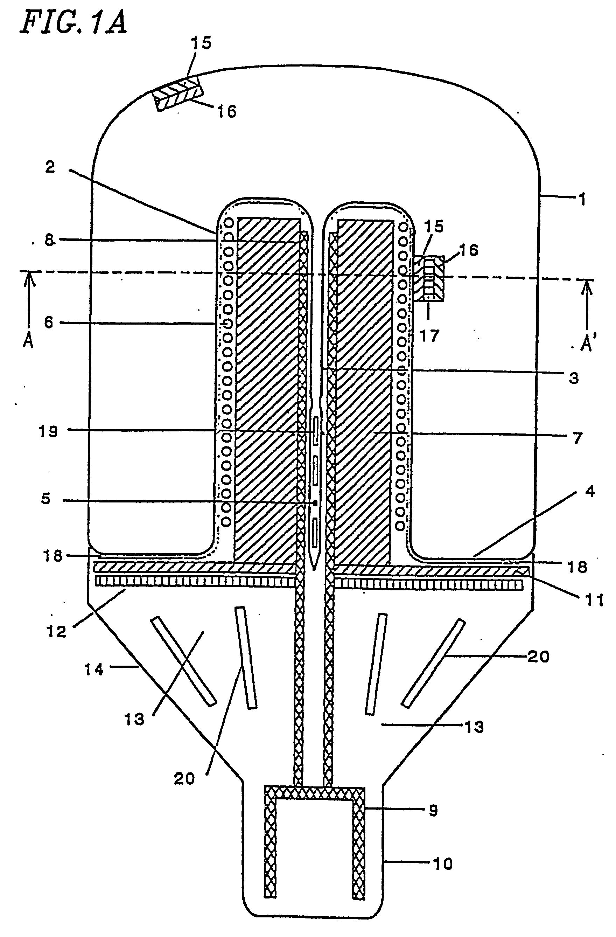

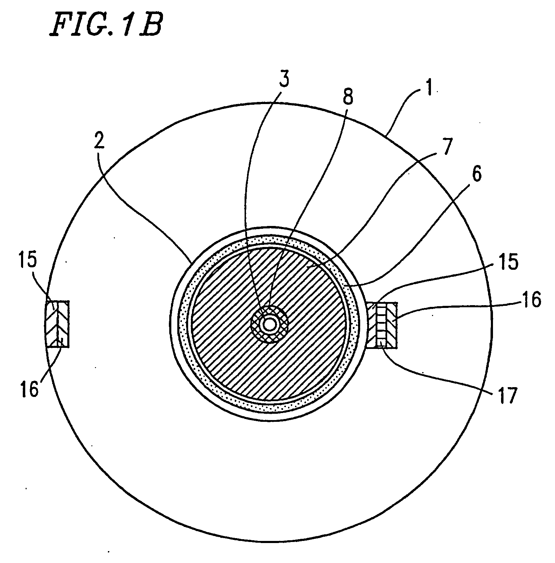

Referring to FIG. 1A, a bulbous envelope 1 made from the glass has a re-entry cavity 2 with an exhausting tabulation 3 located inside the cavity 2 on its axis (or possibly off axis). The tubulation 3 extends from the envelope bottom 4. The fill inert gas (argon, krypton, or the like) is at pressure from 0.1 torr to 5 torr (13.3 Pa to 665 Pa). FIG. 1B is a cross-sectional view of an electrodeless fluorescent lamp shown in FIG. 1A taken along line A-A'.

A mercury amalgam (or mercury dispenser) 5 is positioned in the tubulation 3 and controls the mercury vapor pressure in the envelope. A coil 6 made from multiple strand wire (Litz wire) is wound around a ferrite core 7. The ferrite core 7 was made from MnZn material (see U.S. patent Application 09/303,951 by Chamberlain et al.) and is disposed in the re-entry cavity 2. The coil 6 and ferrite core 7 are maintained at temperatures below Curie point (<220°C) with the help of a cooling structure made from the metal with high thermal conductivity and low RF power losses (low eddy currents) such as aluminum, copper, or the like. The cooling assembly comprises a metal tube 8 positioned inside a ferrite core 7 and the cylinder 9 (cylindrical portion) located inside the Edison socket 10 and having the outer diameter close to that of the inner diameter of Edison socket 10.

To minimize the effect of the metal tube on the coil/ferrite inductance, the top edge of the metal tube was positioned inside of the ferrite core where the magnetic field does not have a radial component. By positioning the top edge of the metal tube 8 in this manner, the coil/ferrite inductance is improved as compared to the case where the top edge of the metal tube 8 is positioned so as to project from the top of the ferrite core 7. Herein, the term "top edge" is defined as one of two edges of the metal tube 8 which is farther from the Edison socket 10 than the other edge.

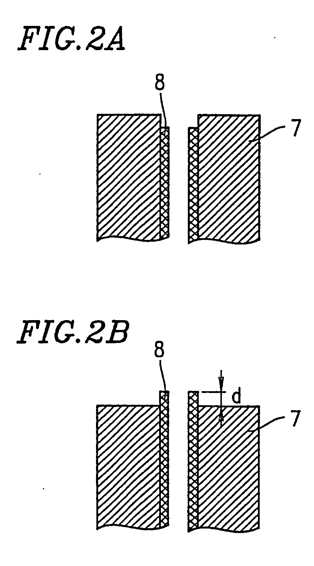

FIG. 2A shows a state where the top edge of the metal tube 8 is positioned so as not to project from the top of the ferrite core 7 (i.e., where the top edge of the metal tube 8 is inside a hollow portion of the ferrite core 7.) FIG. 2B shows a state where the top edge of the metal tube 8 is positioned so as to project from the top of the ferrite core 7 by distance d. In the case where the top edge of the metal tube 8 was positioned as shown in FIG. 2A, the coil/ferrite inductance L_{c} was 387.4 µH, the resistance component was 0.602 Ω, and the quality factor, Q was 404.2. In the case where the top edge of the metal tube 8 was positioned as shown in FIG. 2B and d = 5 mm, the coil/ferrite inductance L_{c} was 384.3 µH, the resistance component was 0.794 Ω, and the quality factor, Q was 303.8. As can be appreciated, when the top edge of the metal tube 8 projects from the top of the ferrite core 7, the coil/ferrite inductance decreases and the resistance component increases. Therefore, the coil power loss increases. Furthermore, the metal tube 8 is undesirably heated to a high temperature by an eddy current generated in the projecting portion of the metal tube 8.

The metal tube 8 is thermally coupled to the ferrite core 7. Herein, the expression "the metal tube 8 is thermally coupled to the ferrite core 7" is defined to simply indicate that the metal tube 8 and the ferrite core 7 are positioned so that heat can be transmitted between the metal tube 8 and the ferrite core 7. This expression is not limited to indicate that the metal tube 8 and the ferrite core 7 are in contact with each other. Throughout this specification, the expression "thermally coupled" is defined to indicate similar states.

The metal tube 8 and cylinder 9 are welded to each other or made from a single piece. In other words, one end of the metal tube 8 is thermally coupled to the cylinder 9.

The cylinder 9 is also thermally coupled to the Edison socket 10. Thus, the heat from the ferrite core 7 and cavity walls 2 is transferred via the metal tube 8 to the cylinder 9 and then dumped to the Edison socket 10.

As can be appreciated, the metal tube 8 and the cylinder 9 act as heat conduction means for conducting the heat generated in the ferrite core 7 to the Edison socket 10. The Edison socket 10 is connected to a line external to the electrodeless fluorescent lamp in order to receive the power to be supplied to the electrodeless fluorescent lamp, and therefore the heat generated while the electrodeless fluorescent lamp is in use is conducted to the outside of the electrodeless fluorescent lamp through the Edison socket 10.

The cylinder 9 has a thread which can be coupled to the thread of the Edison socket 10. The cylinder 9 and the Edison socket 10 can be coupled to each other through the threads.

The heat conduction means shown in FIG. 2A in which the top edge of the metal tube 8 is positioned inside the hollow portion of the ferrite core 7 so as to improve the coil/ferrite inductance does not need to have the structure shown in FIG. 1A. The heat conduction means can have any other structure as long as it has the function of conducting the heat of the ferrite core 7 to the outside of the electrodeless fluorescent lamp. With these other structures, the heat conduction means can provide the effect of improving the coil/ferrite inductance by positioning the top edge of the metal tube inside the hollow portion of the ferrite core 7, as compared to the case where the top edge of the metal tube projects from the top of the ferrite core 7.

Instead of the metal tube 8, a tube formed of a ceramic material can be used. The tube 8 and the cylinder 9 are preferably formed of a material having a high thermal conductivity and a high resistance, in order to effectively conduct the heat generated in the ferrite core 7 to the Edison socket 10 and restrict the magnetic field from generating an eddy current in the tube 8 and the cylinder 9. Specifically, the tube 8 and the cylinder 9 are preferably formed of a material having a thermal conductivity of 20 W/m·K or more and a resistance of 2 Ω·m or more. The tube 8 and the cylinder 9 can be formed of a metal material such as, for example, copper or aluminum and/or a ceramic material such as, for example, alumina, aluminum nitride or silicon carbide.

The ferrite plate 11 increases the coil/ferrite effective permeability, µ_{aff}, and the coil/ferrite inductance, L_{c}, that results in the increase of the coil/ferrite quality factor, Q (Q = 550 at f = 100 kHz), and in the decrease of the coil/ferrite power losses, Pₗₒₛₛ. Consequently, the lamp has high power efficiency, (η =Pₚₗ/Pₗₐₘₚ = (Pₗₐₘₚ - Pₗₒₛₛ)/Pₗₐₘₚ) and high efficacy.

The ferrite plate 11 is formed of a magnetic material and deforms a magnetic field generated by an electric current flowing through the coil 6. The ferrite plate 11 is positioned so that at least a portion of the magnetic flux passing through the ferrite core 7 passes through the ferrite plate 11. In other words, the ferrite plate 11 is magnetically coupled to the ferrite core 7.

The ferrite plate 11 is, for example, a disc formed of a material identical with the material of the ferrite core 7.

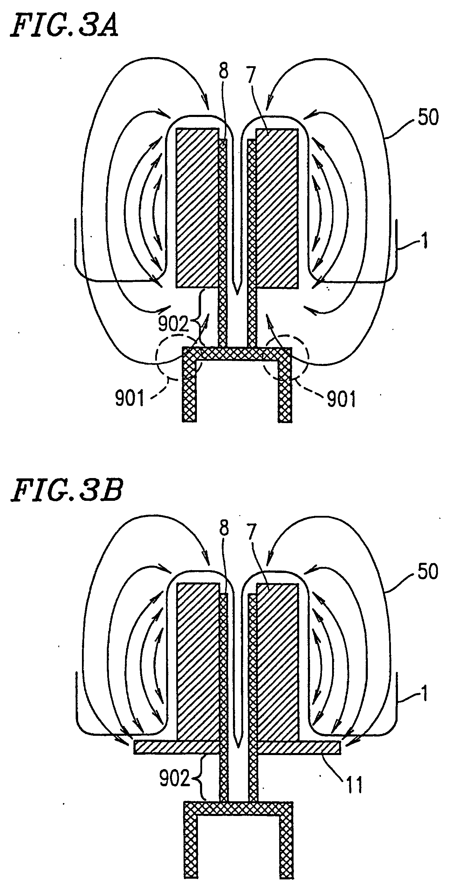

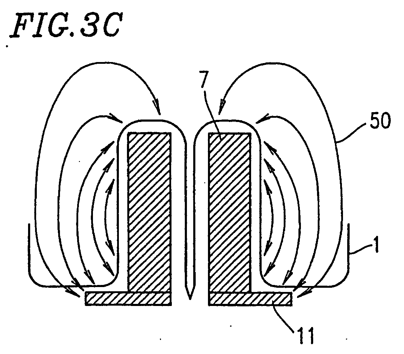

FIG. 3A schematically shows a magnetic field generated in the vicinity of the ferrite core 7 by an electric current flowing through the coil 6 in the absence of the ferrite plate 11. As shown in FIG. 3A, in the absence of the ferrite plate 11, a magnetic flux 50 passes through the cylinder 9 (portion 901). When the cylinder 9 is formed of a material which can generate an eddy current (for example, a metal material), an eddy current is generated in the cylinder 9 by the passage of the magnetic flux 50 through the cylinder 9. Thus, the coil power loss is generated and the lamp efficacy is reduced. The portion of the cylinder 9 in which the eddy current is generated is heated to have its temperature raised. The temperature rise of the cylinder 9 has an adverse affect on the lamp driver and the matching network located in an area 13, and moreover reduce the ability of the tube 8 and the cylinder 9 to function as the heat conduction means of conducting the heat generated in the ferrite core 7 to the Edison socket 10.

FIG. 3B shows that when the ferrite plate 11 is located at the bottom of the ferrite core 7, the magnetic field is deformed. In FIG. 3B, as compared with in FIG. 3A, the spatial expansion of the magnetic field is smaller and the quantity of the magnetic flux outside the envelope 1 is smaller as a result of the provision of the ferrite plate 11. Therefore, the number of lines of magnetic induction passing through the cylinder 9 is reduced. Since the generation of an eddy current in the cylinder 9 is restricted, the cylinder 9 is prevented from having a high temperature due to the eddy current. An eddy current can be generated in a portion 902 of the metal tube 8 shown in FIG. 3A. In the case where the ferrite plate 11 is located at the bottom of the ferrite core 7 as shown in FIG. 3B, the portion 902 of the metal tube 8 can also be restricted from having a high temperature due to the generation of an eddy current.

As can be appreciated, the ferrite plate 11 acts as reduction means for reducing a thermal influence of the magnetic field generated by the electric current flowing through the coil 6 exerted on the metal tube 8 and the cylinder 9 (i.e., the heat conduction means). The heat conduction means does not need to have the structure shown in FIG. 1A. The heat conduction means can have any other structure as long as it has the function of conducting the heat of the ferrite core 7 to the outside of the electrodeless fluorescent lamp. With these other structures of the heat conduction means, the ferrite plate 11 can act as the reduction means for reducing a thermal influence exerted on the heat conduction means.

Since the provision of the ferrite plate 11 can prevent the generation of an eddy current in the metal tube 8 and the cylinder 9, the metal tube 8 and the cylinder 9 can be formed of a material having a low resistance. Such a broad selection of materials which can be used for the metal tube 8 and the cylinder 9 is preferable in that use of a wider variety of materials having a high thermal conductivity is allowed, resulting in improvement of the function of the metal tube 8 and the cylinder 9 as the heat conduction means.

The ferrite plate 11 also acts as deformation means for improving the power efficiency and the efficacy of the electrodeless fluorescent lamp by deforming the magnetic field, regardless of the presence or absence of the metal tube 8 and the cylinder 9.

FIG. 3C schematically shows a magnetic field in the vicinity of the ferrite core 7 of an electrodeless fluorescent lamp which includes neither the tube 8 nor the cylinder 9 forming the heat conduction means, but includes the ferrite plate 11. Due to the provision of the ferrite plate 11, the quantity of the magnetic flux passing through the envelope 1 increases and thus the power efficiency and the efficacy of the electrodeless fluorescent lamp are improved.

The thermal shield 12 made from non-metallic material and having low thermal conductivity thermally insulates the area 13 from the ferrite core 7 and the ferrite disk 11. Herein, the expression "thermally insulate" is defined to include the meaning of "restrict heat transmission". For the thermal shield 12, Xydar, for example, having a thermal conductivity of about 0.36 W/m·K is preferably used. "Xydar" is the registered trademark of Amoco Polymers, Inc. A material used to form the thermal shield 12 preferably has a thermal conductivity of 0.4 W/m·K or less.

The thermal shield 12 acts as restriction means for restricting the heat generated in the ferrite core 7 from being transmitted to the driver.

The area 13 is used for the disposal of the lamp driver and the matching network (not shown) and is kept at temperature below 100°C. The enclosure 14 made from non-metallic material (e.g. plastic) is glued to the lamp bottom 4 and to the Edison socket 10. The protective and phosphor coatings 15 and 16 are disposed on the inner surfaces of the envelope 1 and the re-entry cavity 2. The reflective coating 17 (alumina or the like) is disposed on the inner surface of the bottom 4 of the envelope 1 and on the inner surface of the cavity 2. To minimize visible light losses via the bottom 4 and the cavity walls 2 the outer surface of the bottom 4 and the walls 2 are coated with the reflective coating 18 (alumina or the like). A few glass rods 19 are used to position the amalgam 5 inside the tubulation 3. (When the lamp is operated without amalgam, no glass rods are used.) To reduce temperature inside the area 13 where the driver and matching network are located a few slits 20 were made in the enclosure 14.

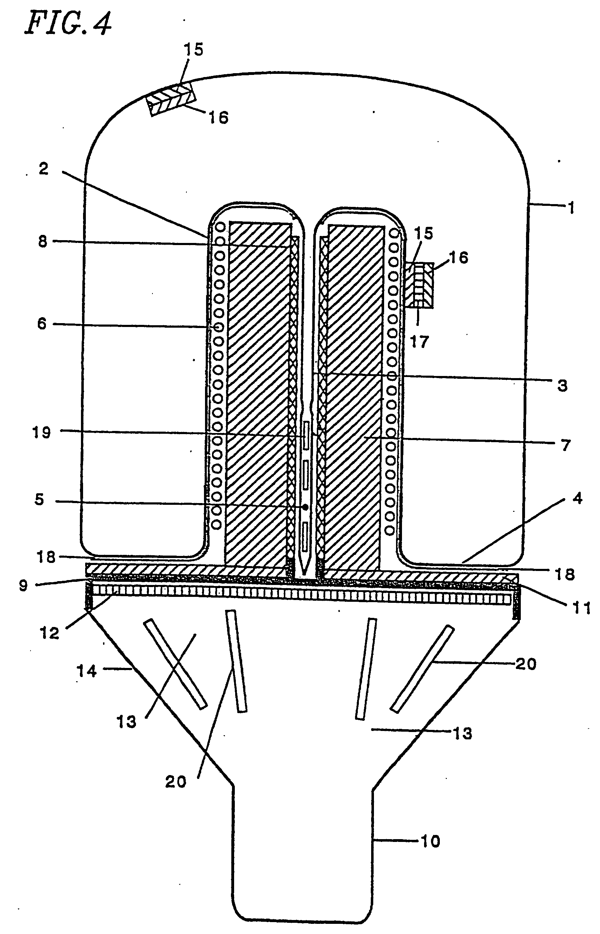

The second embodiment of the present invention is shown in FIG. 4. The cooling arrangement comprises a tube 8 made from material of high thermal conductivity such as alumina, copper, aluminum or the like and a ceramic "skirt" 9 having high thermal conductivity (aluminum oxide, aluminum carbide, or the like). The whole cooling structure could be also made from the single piece of ceramic. The use of the metal with high thermal conductivity such as copper or aluminum is not desirable due to high losses caused by eddy currents. In order to prevent a large eddy current from being generated in the cooling arrangement, it is preferable that the cooling arrangement is formed of a material having a high resistance. The resistance of the material used for the cooling arrangement is preferably equal to or higher than the resistance of copper (2 Ω·m). In order to remove the heat from the ferrite core 7, the material used for the cooling arrangement preferably has a high thermal conductivity. The thermal conductivity of the material used for the cooling arrangement is preferably equal to or higher than the thermal conductivity of alumina (20 W/m·K).

The cooling arrangement acts as thermal conduction means for releasing the heat generated in the ferrite core 7 to the outside of the electrodeless fluorescent lamp.

The heat from the ferrite core 7 and the cavity walls 2 is transferred via the tube 8 to the ceramic 9 and then is removed via convection to ambient atmosphere. The thermal shield 12 made from the material with low thermal conductivity also helps to reduce heat transfer to the driver area 13 and keeps the temperature in this area below about 100°C.

In order to further reduce the temperature of the electronic components in the area 13, slits 20 may be added to the housing unit 14. This however, could be considered optional depending on the lamp operation environment.

In the second embodiment shown in FIG. 4, it is preferable to position the top edge of the tube 8 inside the hollow portion of the ferrite core 7 as in the first embodiment.

In the first and second embodiments, the shape of the envelope 1 is not limited to the shape shown in FIG. 1A or 4. For example, the envelope 1 can have a shape without the re-entry cavity 2. The envelope 1 can be formed of a ceramic material instead of glass. It is sufficient for the envelope 1 to be at least partially light-transmissive.

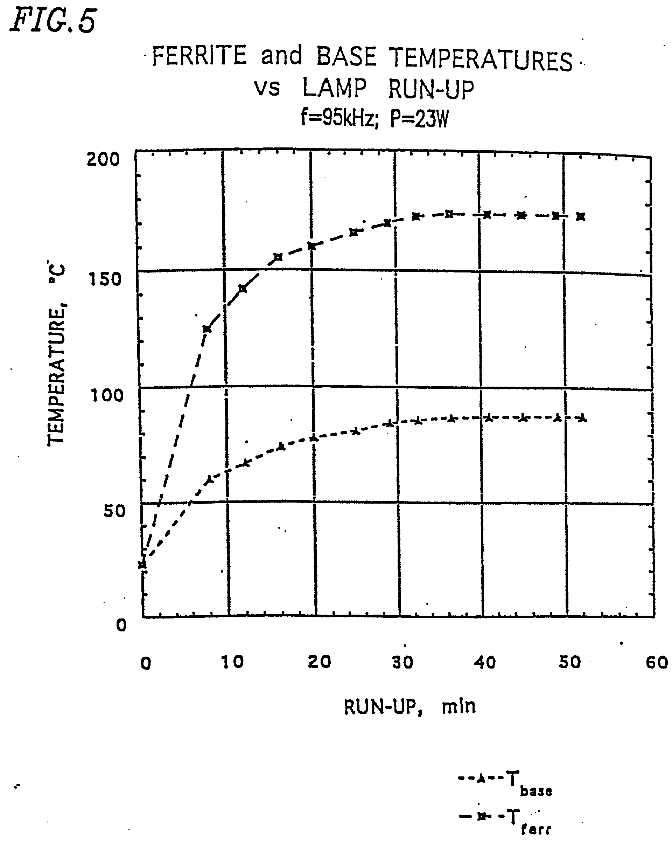

The temperatures of the ferrite core 7, T_{ferr} and inside the area 13, near the thermal shield 12, T_{base} are given in FIG. 5 as functions of the lamp run-up time for the driving frequency of 95 kHz and RF power of 23 W. It is seen that after about 35 min. of operation both temperatures stop to grow. The stabilized temperature of the ferrite core 7 is around 175°C that is substantially lower than Curie point of 220°C. Even if the ambient temperature is 40°C the ferrite temperature is still below 220°C. The stabilized temperature inside the area 13 is about 85°C so at ambient temperature of 40°C T_{base} is still lower than 100°C.

The lamp is operated as follows. The envelope is filled with argon at pressures from 0.1 to 3.0 Torr (13.3 Pa to 399 Pa) dependent on the envelope diameter and length. The mercury vapor pressure in the envelope is controlled by the temperature of the amalgam (or mercury cold spot) 5. The 60 Hz line voltage (100 V or 220 V) is applied to the driver located in the area 13. The high frequency voltage is generated by the driver and applied to the coil 6 via the matching network. The capacitive discharge with low plasma density is ignited at coil voltage around 150-200 V.

When the coil voltage reaches the magnitude that is high enough to maintain in the envelope a self-sustained inductively coupled discharge, the bright discharge appears in the envelope that is accompanied with the decrease of both coil current and voltage. This is the starting of the lamp. The magnitudes of the coil starting voltage and current are determined by the coil number of turns, gas/mercury vapor pressure in the envelope and the envelope geometry.

In the preferred embodiments 1 and 2 the inert gas (argon) pressure in the envelope 1 was about 1 torr (about 133 Pa). The envelope diameter is 60 mm and the envelope length is 62 mm. The induction coil 6 has 60 turns wound in two layers. The lamp starting voltage was 1000 V rms. The coil voltage and current, Vₘ and Iₘ, needed to maintain the inductively coupled discharge decrease as RF power grows. For the coil with 60 turns the typical coil maintaining voltage Vₘ, varied from 480 V at 15 W to 350 V at 40 W and the coil current Iₘ, varied from 2.3 A (15 w) to 1.6 A (40 W).

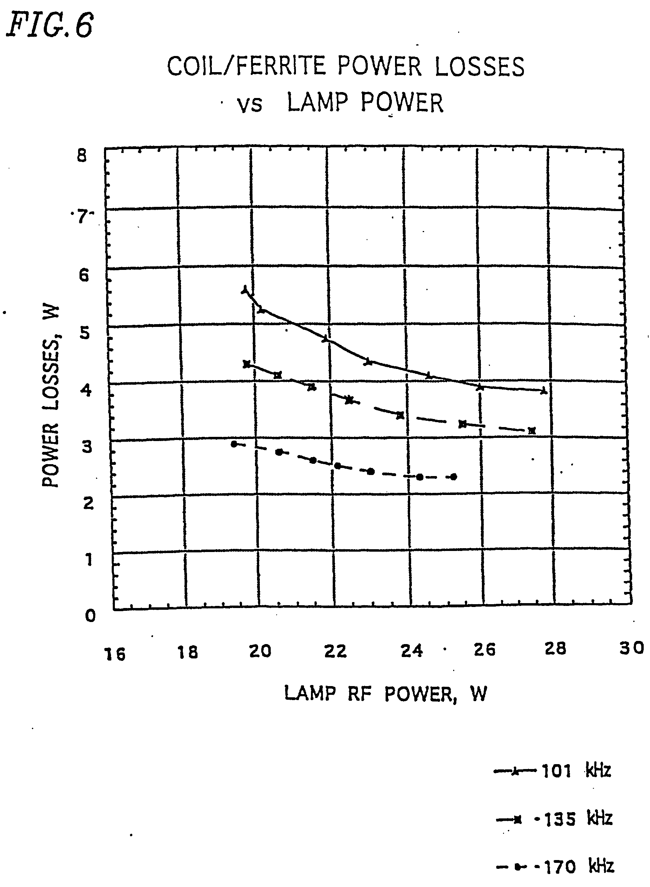

The lamp power efficiency during the lamp operation depends on the coil and ferrite core power losses, Pₗₒₛₛ. The power losses measured in the lamp shown in FIG. 1A (the first embodiment) are plotted as functions of the lamp power, Pₗₐₘₚ, in FIG. 6 for three driving frequencies: 101 kHz, 135 kHz and 170 kHz. The power losses were determined as the difference between the lamp forward power, P_{f}, and reflected power, P_{ref}, measured for the coil current Iₘ but in the absence of the RF discharge in the lamp.

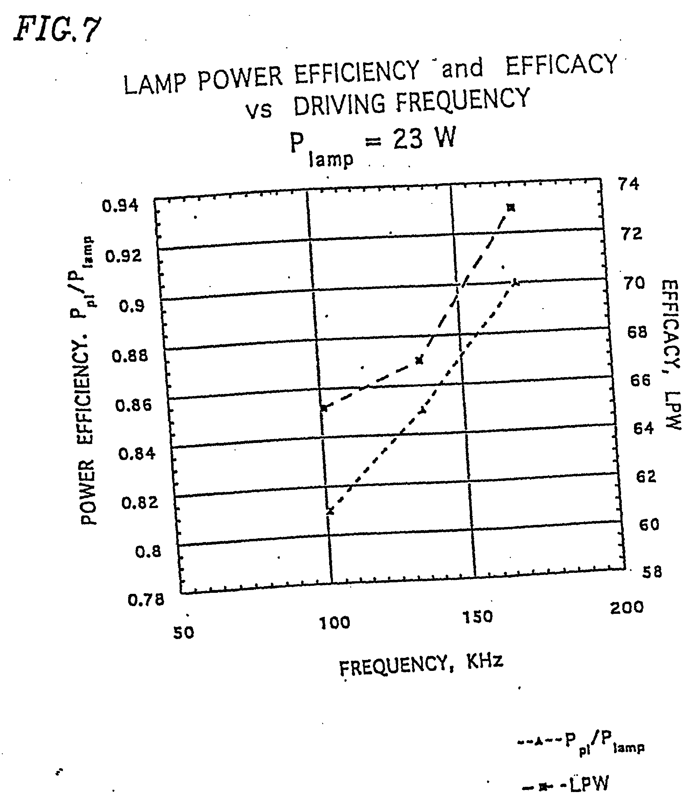

It is seen from FIG. 6 that as the lamp RF power increases, the coil/ferrite power losses, Pₗₒₛₛ, decreases. For instance, for the frequency of 101 kHz, the power losses decreases from 5.6 W at Pₗₐₘₚ = 19.5 W to 3.8 W at Pₗₐₘₚ = 26 W. The increase of the driving frequency leads to lower coil/ferrite power losses. For instance, at the frequency of 170 kHz and the lamps RF power of 23 W, the coil/ferrite power losses are 2.4 W. The decrease of Pₗₒₛₛ at higher frequencies results in higher lamp power efficiency, η = Pₚₗ/Pₗₐₘₚ. The lamp power efficiency, η and the lamp efficacy (LPW) are shown in FIG. 7 as functions of the driving frequency, f, for the lamp described in FIG. 1A (the first embodiment) and operated at lamp RF power of 23 W. It is seen that η increases as the driving frequency increases from 0.81 at f = 101 kHz to 0.9 at f = 170 kHz. It is expected that the lamp efficacy also increases with the driving frequency. Indeed, as it is shown in FIG. 7 the lamp efficacy increases from 65 LPW at f = 101 kHz to 73 LPW at f = 170 kHz.

It should be mentioned here that the efficacy of the lamp described in the present invention and operated at the frequency as low as 100 kHz is higher than that of Genura electrodeless fluorescent lamp operated at the same RF power but at substantially higher driving frequency of 2.65 MHz.

The present invention is not limited to be applicable to an electrodeless fluorescent lamp. For example, the present invention is applicable to an electrodeless lamp in which the inner wall of the envelope 1 (FIG. 1A and FIG. 4) is not coated with the phosphor coating 16 and thus light by discharge is directly released to the outside of the envelope 1, based on a similar principle to the above-described operational principle.

While it is apparent that change and modifications can be made within the spirit and scope of the present invention, it is our intention, however, only to be limited by the appended claims.

## Claims

1. An electrodeless lamp, comprising:
an envelope containing a fill of discharge gas;
a magnetic core;
an induction coil wound around the magnetic core;
a driver for supplying an electric current to the induction coil to drive the electrodeless lamp;
a socket for receiving a power supplied to the electrodeless lamp; and
heat conduction means thermally coupled to the magnetic core and the socket for conducting heat generated in the magnetic core to the socket.

2. An electrodeless lamp according to claim 1, wherein the envelope has a re-entry cavity, and the magnetic core is positioned to be adjacent to the re-entry cavity.

3. An electrodeless lamp according to claim 1, wherein:
the magnetic core has a hollow portion;
the heat conduction means includes a tube and a cylindrical portion thermally coupled to the tube; and
at least a portion of the tube is positioned inside the hollow portion, and the cylindrical portion is thermally coupled to the socket.

4. An electrodeless lamp according to claim 1, wherein the heat conduction means is formed of a material having a thermal conductivity of 20 W/m·K or higher and a resistance of 2 Ω·m or higher.

5. An electrodeless lamp according to claim 1, wherein the heat conduction means is formed of at least one of a metal material and a ceramic material.

6. An electrodeless lamp according to claim 5, wherein the metal material includes at least one of copper and aluminum.

7. An electrodeless lamp according to claim 5, wherein the ceramic material includes at least one of alumina, aluminum nitride, and silicon carbide.

8. An electrodeless lamp according to claim 3, wherein the socket has a first thread, and the cylindrical portion has a second thread which can be coupled to the first thread.

9. An electrodeless lamp according to claim 3, wherein one end of the tube is thermally coupled to the cylindrical portion, and the other end of the tube is positioned inside the hollow portion of the magnetic core.

10. An electrodeless lamp, comprising:
an envelope containing a fill of discharge gas;
a magnetic core;
an induction coil wound around the magnetic core;
a driver for supplying an electric current to the induction coil to drive the electrodeless lamp; and
restriction means for restricting heat generated in the magnetic core from being transmitted to the driver.

11. An electrodeless lamp according to claim 10, wherein the restriction means is formed of a material having a thermal conductivity of 0.4 W/m·K or less.

12. An electrodeless lamp, comprising:
an envelope containing a fill of discharge gas;
a magnetic core;
an induction coil wound around the magnetic core;
a driver for supplying an electric current to the induction coil to drive the electrodeless lamp; and
deformation means magnetically coupled to the magnetic core for deforming a magnetic field generated by an electric current flowing through the induction coil so as to increase a quantity of a magnetic flux passing through the envelope.

13. An electrodeless lamp according to claim 12, wherein the deformation means includes a disc formed of a magnetic material which is magnetically coupled to the magnetic core.

14. An electrodeless lamp according to claim 13, wherein the magnetic material is identical with a material of the magnetic core.

15. An electrodeless lamp, comprising:
an envelope containing a fill of discharge gas;
a magnetic core;
an induction coil wound around the magnetic core;
a driver for supplying an electric current to the induction coil to drive the electrodeless lamp;
heat conduction means thermally coupled to the magnetic core for conducting heat generated in the magnetic core to the outside of the electrodeless lamp; and
reduction means magnetically coupled to the magnetic core for reducing a thermal influence of a magnetic field generated by an electric current flowing through the induction coil exerted on the heat conduction means.

16. An electrodeless lamp according to claim 15, wherein the reduction means includes a disc formed of a magnetic material which is magnetically coupled to the magnetic core.

17. An electrodeless lamp according to claim 16, wherein the magnetic material is identical with a material of the magnetic core.

18. An electrodeless lamp, comprising:
an envelope containing a fill of discharge gas;
a magnetic core having a hollow portion;
an induction coil wound around the magnetic core;
a driver for supplying an electric current to the induction coil to drive the electrodeless lamp; and
heat conduction means thermally coupled to the magnetic core for conducting heat generated in the magnetic core to the outside of the electrodeless lamp,
wherein:
the heat conduction means includes a tube thermally coupled to the magnetic core, and
one end of the tube is positioned inside the hollow portion.
